# EUROPÄISCHE PATENTSCHRIFT

(11) **EP 2 906 764 B1**
(45) Veröffentlichungstag und Bekanntmachung des Hinweises auf die Patenterteilung: **28.03.2018**
(21) Anmeldenummer: 13802864.2
(22) Anmeldetag: 27.09.2013
(51) Int. Cl.: E05B 81/24, E05B 85/02, H02K 5/22, E05B 81/06, H02K 15/14

(54) **ANTRIEB FÜR EINE STELLEINHEIT**
DRIVE FOR AN ACTUATING UNIT
ENTRAÎNEMENT POUR UNE UNITÉ DE COMMANDE

(30) Priorität: 12.10.2012 DE 102012218651
(43) Veröffentlichungstag der Anmeldung: 19.08.2015
(73) Patentinhaber: Kiekert Aktiengesellschaft, 42579 Heiligenhaus (DE)
(72) Erfinder: TÖPFER, Claus, 71063 Sindelfingen (DE)
(86) Internationale Anmeldenummer: PCT/DE2013/000553
(87) Internationale Veröffentlichungsnummer: WO 2014/056471

(56) Entgegenhaltungen:
- EP-A1- 0 084 278
- EP-A1- 0 338 394
- DE-A1- 4 419 615
- DE-B- 1 159 064

## Beschreibung

Die Erfindung betrifft einen Antrieb für eine Stelleinheit, insbesondere Servoschließeinrichtung, vorzugsweise für ein Kraftfahrzeugschloss, mit den Merkmalen des Oberbegriffs des Anspruchs 1.

Ein Antrieb für eine Stelleinheit dient zur Beaufschlagung eines Stellgliedes, welches auf ein Verbindungsmittel zur Beaufschlagung eines Stellelementes arbeitet. Ein derartiger Antrieb für eine Stelleinheit ist aus der Druckschrift DE 20 2009 010 787 U1 bekannt, welche eine Servoschließeinrichtung für ein Kraftfahrzeugschloss mit einem Kraftfahrzeugtürverschluss als Stellelement und einem Bowdenzug als Verbindungsmittel offenbart.

Ein Antrieb für eine Stelleinheit umfasst ein Gehäuse, welches den Antriebsmotor schützt und umschließt. Regelmäßig dient das Gehäuse zudem der Befestigung an einem Trägerelement, beispielsweise einer Fahrzeugtür. Bei der Montage des Antriebs wird der Motor in das Gehäuse eingesetzt. Kabel im Gehäuse verbinden den Motor mit einem elektrischen Anschlussmodul, an welches später eine Energiequelle für ein Versorgen des Antriebs mit Strom angeschlossen werden kann.

Es gibt Antriebe für Stelleinheiten, insbesondere im Falle einer Servoschließeinrichtung für ein Kraftfahrzeugschloss, bei denen die Anschlusskontakte des elektrischen Anschlussmoduls nicht an dem Gehäuseteil des Gehäuses angeordnet sind, welches den Motor nebst Motorkontakt aufnimmt. Dies ist beispielsweise der Fall, wenn das Anschlussmodul im Gehäusedeckel angebracht ist. Nach dem Einsetzten des Motors bleibt das Gehäuse daher zunächst für das Kontaktieren und Verlegen der Kabel geöffnet. Beim Schließen des Gehäuses kann jedoch ein elektrisches Kabel übermäßig stark gekrümmt werden. Ein Abknicken des Kabels und dadurch verursachte Kabeldefekte können die Folge sein.

Soweit nachfolgend nichts anderes angegeben, können die vorgenannten Merkmale eines Antriebs für eine Stelleinheit einzeln oder in Kombination Bestandteil der Erfindung sein. Antriebe gemäß dem Oberbegriff des Anspruchs 1 sind aus der EP0338394 bzw. DE1159064 bekannt.

Es ist Aufgabe der Erfindung, einen Antrieb für eine Stelleinheit der eingangs genannten Art weiterzuentwickeln. Die Aufgabe der Erfindung wird durch einen Antrieb für eine Stelleinheit mit den Merkmalen des ersten Anspruchs gelöst. Vorteilhafte Ausgestaltungen ergeben sich aus den Unteransprüchen. Ein Nebenanspruch betrifft ein Verfahren für die Montage des Antriebs.
Zur Lösung der Aufgabe dient ein Antrieb für eine Stelleinheit, insbesondere Servoschließeinrichtung, vorzugsweise für ein Kraftfahrzeugschloss, mit einem Gehäuse aufweisend ein Motorgehäuseteil zum Aufnehmen eines Elektromotors und ein Gehäusedeckelteil zum Abdecken des Motorgehäuseteils, wobei ein Kabel für das elektrische Leiten von Strom mit einem Motorkontakt des Elektromotors im Motorgehäuseteil elektrisch verbunden ist und das Kabel einen Umlenkbereich umfasst. Der Umlenkbereich des Kabels ist außerhalb oder zumindest teilweise außerhalb des Gehäuses angeordnet.
Der Umlenkbereich ist ein Kabelabschnitt, welcher im Zuge der Montage beim Schließen des Gehäuses gekrümmt wird.
Durch die Anordnung des Umlenkbereichs des Kabels außerhalb oder zumindest teilweise außerhalb des Gehäuses kann auf besonders einfache Weise eine übermäßig starke Krümmung des Kabels vermieden werden. Zusätzliche Arbeitsschritte und/ oder Bauteile zur Vermeidung von übermäßig starker Krümmung des Kabels können so eingespart werden. Erfindungsgemäß verläuft der Umlenkbereich des Kabels um die gemeinsame Gelenkachse von Motorgehäuseteil und Gehäusedeckelteil, insbesondere in unmittelbarer Nähe zur Gelenkachse oder optional durch die Gelenkachse.

Die gemeinsame Gelenkachse von Motorgehäuseteil und Gehäusedeckelteil beschreibt die Drehachse, um welche sich der Motorgehäuseteil und der Gehäusedeckelteil zueinander für ein Öffnen und Schließen während der Montage bewegen. Sind beide Gehäuseteile durch ein Gelenk beweglich miteinander verbunden, so entspricht die Gelenkachse der Drehachse des Gelenks. Eine Drehachse bzw. Gelenkachse liegt aber auch dann vor, wenn beide Gehäuseteile keine Gelenkverbindung aufweisen, sondern beispielsweise das Gehäusedeckelteil nur über eine Außenkante an einem Randbereich des Motorgehäuseteils für eine Auf- und Zuklappbewegung abgestützt wird.

Durch das Anordnen des Umlenkbereichs des Kabels um die gemeinsame Gelenkachse, insbesondere in unmittelbarer Nähe zur Gelenkachse oder optional durch die Gelenkachse, wird eine besonders geringe Änderung des Kabelwegs beim Schließen des Gehäuses ermöglicht, wodurch überschüssige Kabellänge und damit eine übermäßig starke Krümmung des Kabels vermieden werden kann.

In einer Ausführungsform der Erfindung weist das Motorgehäuseteil eine Rundung auf, die auf der dem Elektromotor abgewandten Seite der Gelenkachse das Kabel im Umlenkbereich um die Gelenkachse zu führen vermag, wobei der Radius der Rundung größer oder gleich dem zulässigen Biegeradius des Kabels ist.

Unter dem Biegeradius versteht man die stärkste Krümmung, die ein Kabel einnehmen darf, ohne dass sich die Kabeleigenschaften ändern. Der zulässige Biegeradius eines Kabels wird in der Regel vom Hersteller mitgeteilt.

Durch das Führen des Kabels um die Gelenkachse mittels einer Rundung mit einem Radius größer oder gleich dem zulässigen Biegeradius kann auf besonders einfache Weise ein Unterschreiten des zulässigen Biegeradius vermieden werden.

In einer Ausführungsform der Erfindung sind am Motorgehäuseteil eine oder mehrere Rippen zur Begrenzung des seitlichen Bewegungsspielraums des Kabels wenigstens in einem Teil des Umlenkbereichs vorgesehen.

Seitlicher Bewegungsspielraum bezieht sich auf die Bewegungsfreiheit eines Kabels auf einer Auflagefläche quer zur Kabelführungsrichtung.

Mithilfe der Rippen wird ein besonders einfaches Verlegen des Kabels ermöglicht. Zusätzlicher zeitlicher Montageaufwand zum Einfügen des Kabels in Kabelhaltemittel, beispielsweise Klemmaufnahmen, kann so vermieden werden. Schließlich wirken seitlich angeordnete Rippen schützend für das Kabel und verhindern, dass das Kabel nahe gelegene Vorsprünge erreichen und sich dort aufhängen könnte.

In einer Ausführungsform der Erfindung sind mindestens zwei Rippen so beabstandet, dass ein seitliches Spiel des Kabels vorliegt. Der Abstand zwischen zwei Rippen ist also größer als der Kabeldurchmesser.

Durch das seitliche Führen des Kabels mittels mit Spiel angeordneter Rippen kann vorteilhaft besonders zuverlässig und störungsfrei bewirkt werden, dass das Kabel in gewissem Maße einem Krümmen des Kabels an anderer Stelle durch Ausgleichsbewegungen zumindest teilweise entgegenwirken kann.

In einer Ausführungsform der Erfindung umfasst insbesondere die Rippe des Motorgehäuseteils einen Anschlag zur Drehbegrenzung des Gehäusedeckelteils beim Öffnen des Gehäuses. Durch den Anschlag zur Drehbegrenzung kann eine übermäßig starke Krümmung des Kabels während der Montage vermieden werden.

In einer Ausführungsform der Erfindung ist der Motorgehäuseteil so ausgestaltet, dass im montierten Zustand der Motorkontakt des Elektromotors der Gelenkachse zugewandt ist. Durch das Ausrichten des Motorkontakts zur Gelenkachse kann Kabelmaterial eingespart und ein besonders einfaches und schnelles Einsetzen des Elektromotors nebst Kabel erzielt werden.

In einer Ausführungsform der Erfindung ist eine Öffnung so im Motorgehäuseteil angeordnet ist, dass die Öffnung an der Außenseite des Motorgehäuseteils tangential auf die Rundung um die Gelenkachse stößt. Durch die tangential auf die Rundung um die Gelenkachse stoßende Öffnung im Motorgehäuseteil kann bewirkt werden, dass das an den Motor angeschlossene Kabel besonders geradlinig, also mit besonders wenig Krümmung, durch die Öffnung aus dem Motorgehäuseteil herausgeführt und über die Rundung um die Gelenkachse geführt werden kann.

In einer Ausführungsform der Erfindung ist ein U-förmiger Kanal zum Führen des Kabels vorgesehen, dessen Tiefe größer ist als der Kabeldurchmesser. Durch den erfindungsgemäßen Kanal kann das Kabel eingelassen geführt werden und somit vor Beschädigungen durch Elemente oder Komponenten innerhalb des Gehäuses geschützt werden.

In einer Ausführungsform der Erfindung sieht der U-förmige Kanal ein seitliches Spiel für das Kabel vor. Ein U-förmiger Kanal mit seitlichem Spiel für das Kabel hat den Vorteil, dass das Kabel in gewissem Maße einem Krümmen des Kabels an anderer Stelle durch Ausgleichsbewegungen zumindest teilweise entgegenwirken kann.

In einer Ausführungsform der Erfindung weist der U-förmige Kanal im Umlenkbereich des Kabels eine Rundung mit einem Radius größer oder gleich dem zulässigen Biegeradius auf. Durch das Führen des Kabels in einem U-förmigen Kanal mit einer Rundung mit einem Radius größer oder gleich dem zulässigen Biegeradius kann dem Unterschreiten des zulässigen Biegeradius entgegengewirkt werden.
In einer Ausführungsform der Erfindung sieht die Rundung des U-förmigen Kanals eine Öffnung vor, welche so angeordnet ist, dass ein Kabel im Umlenkbereich beim Schließen des Gehäuses im Zuge der Montage von der Rundung des Motorgehäuseteils durch die Öffnung in der Rundung des U-förmigen Kanal in den U-förmigen Kanal des Gehöusedeckelteils gelangen kann. Durch die Öffnung wird eine Montage mit besonders geringer Krümmung des Kabels am Übergang zwischen Motorgehäuseteil und Deckelgehöuseteil im Umlenkbereich ermöglicht.
In einer Ausführungsform der Erfindung sieht der U-förmige Kanal einen Anschlag zur Drehbegrenzung des Gehäusedeckelteils beim Öffnen des Gehäuses für die Montage vor. Durch den Anschlag des U-förmigen Kanals des Gehäusedeckelteils, welcher beim Öffnen des Gehäuses gegen den Anschlag der Rippe des Motorgehäuseteils stößt, kann eine übermäßig starke Krümmung des Kabels während der Montage weiter verbessert vermieden werden.
In einer Ausführungsform der Erfindung sieht der Gehäusedeckelteil ein Anschlussmodul zum Anschließen einer Stromquelle vor, welches einen Anschlusskontakt für die elektrische Verbindung mit dem Motorkontakt mittels Kabel vorsieht. Durch das Anschlussmodul wird eine besonders einfache und schnelle Montage des Antriebs ermöglicht.
In einer Ausführungsform der Erfindung mündet der U-förmige Kanal des Gehöusedeckelteils im Bereich eines Anschlusskontaktes des Anschlussmoduls. Durch die erfindungsgemäße Anordnung des U-förmigen Kanals unmittelbar zu den Anschlusskontakten führend wird ein besonders großer Schutz des Kabels bewirkt. In einer Ausführungsform der Erfindung ist in dem U-förmigen Kanal des Gehäusedeckelteils ein Kabelhaltemittel zum Befestigen des Kabels im U-förmigen Kanal vorgesehen, beispielsweise eine Klemmaufnahme. Durch das Vorsehen von ein oder mehreren Kabelhaltemitteln im U-förmigen Kanal kann bewirkt werden, dass das Kabel nicht aus dem U-förmigen Kanal gelangt, etwa durch die angreifende Schwerkraft oder die Fliehkräfte beim Öffnung und Schließen des Gehäuses.

Die Kabelhaltemittel weisen insbesondere die Form eines Widerhakens mit Widerhakenarm und Widerhakenkopf auf. Durch eine elastische Verformung des Widerhakenarms beim Einfügen des Kabels wird eine Klemmkraft erzeugt, welche das Kabel zwischen dem Widerhakenarm und der Seitenwand des U-förmigen Kanals einklemmt. Durch eine äußere Phase am Widerhakenkopf wird ein einfaches Einfügen des Kabels in das Kabelhaltemittel ermöglicht. Ferner wirkt ein Absatz des Widerhakenkopfes als Rückhaltefläche dem Herausbewegen des Kabels aus dem Kabelhaltemittel und damit aus dem U-förmigen Kanal entgegen.

In einer Ausführungsform der Erfindung ist ein Gelenk für ein um die Gelenkachse bewegliches Verbinden von Motorgehäuseteil und Gehäusedeckelteil vorgesehen, vorzugsweise für ein loses Verbinden, insbesondere mittels eines L-förmigen Gelenkarms und/ oder eines O-förmige Gelenkzapfens. Durch das bewegliche Verbinden der Gehäuseteile mittels Gelenk wird eine besonders einfache und schnelle Montage des Antriebs ermöglicht. Ein Gelenk umfassend einen L-förmigen Gelenkarm und/ oder einen O-förmigen Gelenkzapfen ist mit besonders geringem Aufwand realisierbar.

In einer Ausführungsform der Erfindung sind der L-förmige Gelenkarm am Gehäusedeckelteil und der O-förmige Gelenkzapfen am Motorgehäuseteil vorgesehen. Weil in der Regel bei der Montage der Gehäusedeckelteil von oben auf den Motorgehäuseteil gesetzt wird, bewirkt der O-förmige Gelenkzapfen am Motorgehäuseteil eine stabile Auflage und der L-förmige Gelenkarms am Gehäusedeckelteil eine leichtgängige Drehbarkeit um die Gelenkachse. Der Fertigungsaufwand wird vorteilhaft so reduziert.

Ein weiterer Aspekt der Erfindung betritt ein Verfahren für die Montage eines Antriebs für eine Stelleinheit, insbesondere Servoschließeinrichtung, vorzugsweise für ein Kraftfahrzeugschloss, mit einem Motorgehäuseteil zum Aufnehmen eines Elektromotors und einem Gehäusedeckelteil zum Abdecken des Motorgehäuseteils, wobei ein Kabel für das elektrische Leiten von Strom mit einem Motorkontakt des Elektromotors im Motorgehäuseteil elektrisch verbunden ist und das Kabel einen Umlenkbereich umfasst.

Das erfindungsgemäße Verfahren sieht vor, dass ein Kabel für das elektrische Verbinden eines Motorkontakts des Elektromotors im Motorgehäuseteil aus dem Motorgehäuseteil herausgeführt wird, anschließend um eine gemeinsame Gelenkachse von Motorgehäuseteil und Gehäusedeckelteil geführt wird, und schließlich in den Gehäusedeckelteil hineingeführt wird.

Durch das erfindungsgemäße Verfahren kann ein Antrieb für eine Stelleinheit besonders einfach und schnell so montiert werden, dass eine übermäßig starke Krümmung des Kabels vermieden werden kann.

Nachfolgend wird die Erfindung anhand der Figuren 1 bis 5 näher erläutert.

Es zeigen:
Figur 1: Antrieb mit geöffnetem Gehäuse in Seitenansicht;
Figur 2: Antrieb mit geöffnetem Gehäuse in isometrischer Ansicht;
Figur 3: Motorgehäuseteil in Draufsicht;
Figur 4: Deckelgehäuseteil in isometrischer Ansicht;
Figur 5: Antrieb mit geöffnetem Gehäuse in isometrischer Ansicht.

Die im Rahmen der nachfolgenden Ausführungsbeispiele genannten Merkmale können einzeln oder in beliebiger Kombination mit den Gegenständen der Ansprüche kombiniert werden.

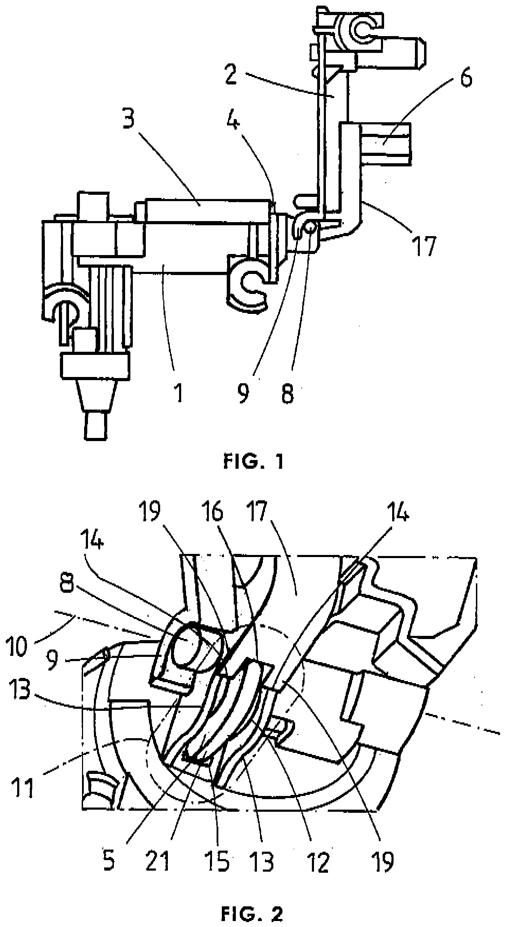

Das in den Figuren 1 bis 5 dargestellte Ausführungsbeispiel der Erfindung ist ein Antrieb für eine Servoschließeinrichtung für ein Kraftfahrzeugschloss mit einem Motorgehäuseteil 1 zum Aufnehmen eines Elektromotors 3 und einem Gehäusedeckelteil 2 zum Abdecken des Motorgehäuseteils 1. Die Kabel 5, 21 für das elektrische Leiten von Strom verbinden die zwei Motorkontakte 4 des Elektromotors 3 im Motorgehäuseteil 1 elektrisch mit den zwei Anschlusskontakten 7 des Anschlussmoduls 6. Das Kabel 5 und das Kabel 21 sind entlang des gleichen Kabelwegs im Gehäuse verlegt, also der durch die Anordnung der Führungs- und Haltemittel vorgesehene Weg eines Kabels in und zwischen den Gehäuseteilen. Das Kabel 5 und das Kabel 21 sind baugleich und nicht miteinander verbunden oder aneinander befestigt.

Um die Montage zu erleichtern, ist das Gehäusedeckelteil 2 und das Motorgehäuseteils 1 mittels eines Gelenks beweglich verbunden, welches aus einem O-förmigen Gelenkzapfen 8 am Motorgehäuseteil 1 und einem darauf lose aufliegenden L-förmigen Gelenkarm 9 am Gehäusedeckelteil 2 gebildet wird (Fig. 1) und eine Drehbewegung bzw. eine Auf- und Zuklappbewegung um die Gelenkachse 10 ermöglicht.

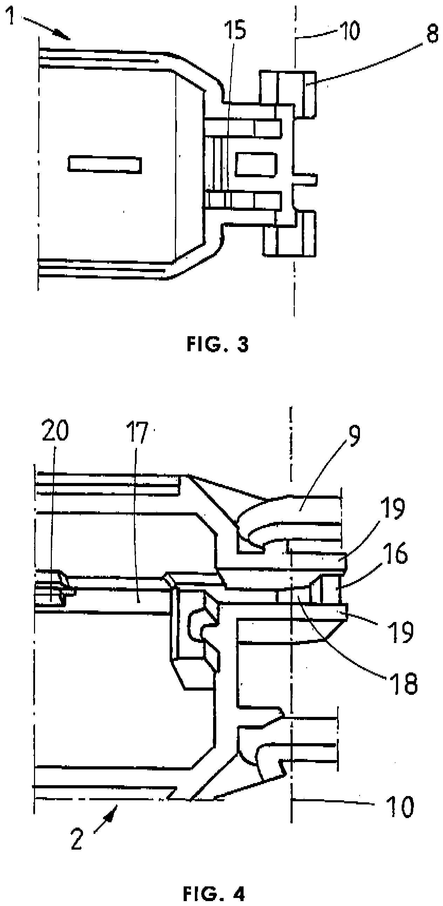

Der Umlenkbereich 11 der Kabel 5, 21 ist zum Teil außerhalb des Gehäuses angeordnet und wird mittels einer Rundung 12 am Motorgehäuseteil 1 auf der dem Elektromotor 3 abgewandten Seite der Gelenkachse 10 um die Gelenkachse 10 geführt (Fig. 2). Dadurch, dass der Radius der Rundung 12 größer als der zulässige Biegeradius der Kabel 5, 21 ist, kann eine übermäßig stärke Krümmung der Kabel 5, 21 vermieden werden. Die Rundung 12 ist zur Gelenkachse 10 so versetzt angeordnet, dass durch die Rundung 12 die Kabel 5, 21 im Umlenkbereich 11 in unmittelbarer Nähe zur Gelenkachse 10 um die Gelenkachse 10 herumgeführt werden können (Fig. 3). Hierdurch wird eine besonders geringe Änderung des Kabelwegs durch das Schließen des Gehäuses ermöglicht.

Am Motorgehäuseteil 1 sind im Bereich der Rundung 12 zwei Rippen 13 zur Begrenzung des seitlichen Bewegungsspielraums der Kabel 5, 21 beim Führen der Kabels 5, 21 um die Rundung 12 angeordnet. Die Rippen 13 sind so beabstandet, dass ein seitliches Spiel der Kabel 5, 21 ermöglicht wird. Die Rippen 13 weisen ferner einen Anschlag 14 zur Drehbegrenzung des Gehäusedeckelteils 2 beim Öffnen des Gehäuses für die Montage auf (Fig.2).

Das Motorgehäuseteil 1 weist eine Öffnung 15 an der dem Motorkontakt 4 zugewandten Außenseite auf, die tangential auf die Rundung 12 des Motorgehäuseteils 1 stößt. Die Kabel 5, 21 werden von den Motorkontakten 4 durch die Öffnung 15 hinausgeführt, entlang der Rundung 12 um die Gelenkachse 10 herumgeführt und durch die Öffnung 16 in einen U-förmigen Kanal 17 des Gehäusedeckelteils 2 für ein geschütztes Führen der Kabel 5, 21 im Gehäusedeckelteil 2 hineingeführt (Fig. 2). Der U-förmige Kanal 17 weist im Umlenkbereich 11 der Kabel 5, 21 eine Rundung 18 auf (Fig. 4). Der Radius der Rundung 18 ist größer als der zulässige Biegeradius der Kabel 5, 21.

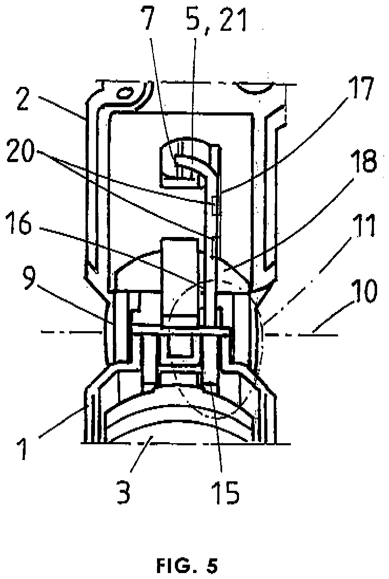

Die Breite und die Tiefe des U-förmigen Kanals 17 im Querschnitt sind beide größer als die Summe der Durchmesser des Kabels 5 und des Kabels 21, wodurch ein seitliches Spiel für die Kabel 5, 21 vorliegt und die Kabel 5, 21 zudem im U-förmigen Kanal 17 schützend eingelassen werden können (Fig. 5). Ferner weist der U-förmige Kanal 17 an der Seite mit der Öffnung 16 einen Anschlag 19 auf, der zum Zwecke der Drehbegrenzung des Gehäusedeckelteils 2 relativ zum Motorgehäuseteil 1 beim Öffnen des Gehäuses für die Montage auf dem Anschlag 14 der Rippen 13 aufzuliegen vermag (Fig. 2).
In dem U-förmigen Kanal 17 des Gehöusedeckelteils 2 werden die Kabel 5, 21 mithilfe von zwei Kabelhaltemitteln 20 entgegen der Schwerkraft und der Fliehkräfte beim Öffnen und Schließen des Gehäuses in Position gehalten und zu den Anschlusskontakten 7 des Anschlussmoduls 6 geführt (Fig. 5).

### Bezugszeichen:

1: Motorgehäuseteil
2: Gehäusedeckelteil
3: Elektromotor
4: Motorkontakt
5: Kabel
6: Anschlussmodul
7: Anschlusskontakt
8: Gelenkzapfen
9: Gelenkarm
10: Gelenkachse
11: Umlenkbereich
12: Rundung (Motorgehäuseteil)
13: Rippe
14: Anschlag (Motorgehäuseteil)
15: Öffnung (Motorgehäuseteil)
16: Öffnung (Gehäusedeckelteil)
17: U-förmiger Kanal
18: Rundung (Gehäusedeckelteil)
19: Anschlag (Gehäusedeckelteil)
20: Kabelhaltemittel
21: Kabel

## Patentansprüche

1. Antrieb für eine Stelleinheit, insbesondere Servoschließeinrichtung, vorzugsweise für ein Kraftfahrzeugschloss, mit einem Gehäuse aufweisend ein Motorgehäuseteil (1) zum Aufnehmen eines Elektromotors (3) und ein Gehäusedeckelteil (2) zum Abdecken des Motorgehäuseteils (1), wobei ein Kabel (5, 21) für das elektrische Leiten von Strom mit einem Motorkontakt (4) des Elektromotors (3) im Motorgehäuseteil (1) elektrisch verbunden ist und das Kabel (5, 21) einen Umlenkbereich (11) umfasst, wobei der Umlenkbereich (11) des Kabels (5, 21) außerhalb oder zumindest teilweise außerhalb des Gehäuses (1, 2) angeordnet ist, **dadurch gekennzeichnet, dass** der Umlenkbereich (11) des Kabels (5, 21) so angeordnet ist, dass der Umlenkbereich (11) um die gemeinsame Gelenkachse (10) des Motorgehäuseteils (1) und Gehäusedeckelteils (2) verläuft, insbesondere in unmittelbarer Nähe zur Gelenkachse (10) oder optional durch die Gelenkachse (10).

2. Antrieb für eine Stelleinheit nach Anspruch 1, **dadurch gekennzeichnet, dass** eine Rundung (12) am Motorgehäuseteil (1) oder eine Rundung (18) am Gehäusedeckelteil (2) so beschaffen sind, dass sie auf der dem Elektromotor (3) abgewandten Seite der Gelenkachse (10) das Kabel (5, 21) im Umlenkbereich (11) um die Gelenkachse (10) zu führen vermögen und/ oder einen Radius größer oder gleich dem zulässigen Biegeradius des Kabels (5, 21) aufweisen.

3. Antrieb für eine Stelleinheit nach einem der vorhergehenden Ansprüche, **gekennzeichnet durch** eine oder mehrere Rippen (13) am Motorgehäuseteil (1) zur Begrenzung des seitlichen Bewegungsspielraums des Kabels (5, 21) wenigstens in einem Teil des Umlenkbereichs (11), insbesondere mindestens zwei Rippen, bevorzugt genau zwei Rippen mit einem Abstand zueinander, der optional gleich oder vorzugsweise größer als der Kabeldurchmesser des Kabels (5, 21) ist.

4. Antrieb für eine Stelleinheit nach dem vorhergehenden Anspruch, **dadurch gekennzeichnet, dass** die Rippe (13) des Motorgehäuseteils (1) einen Anschlag (14) zur Drehbegrenzung des Gehäusedeckelteils (2) beim Öffnen des Gehäuses (1, 2) für eine Montage vorsieht.

5. Antrieb für eine Stelleinheit nach einem der vorhergehenden Ansprüche, **dadurch gekennzeichnet, dass** der Motorkontakt (4) des Elektromotors (3) der Gelenkachse (10) zugewandt ist und/ oder eine Öffnung (15) so im Motorgehäuseteil (1) angeordnet ist, dass die Öffnung (15) an der Außenseite des Motorgehäuseteils (1) tangential auf der Rundung (12) des Motorgehäuseteils (1) aufliegt.

6. Antrieb für eine Stelleinheit nach einem der vorhergehenden Ansprüche, **gekennzeichnet durch** einen U-förmigen Kanal (17) am Gehäusedeckelteil (2) zum Führen des Kabels (5, 21), insbesondere mit einer Tiefe oder einer Tiefe und einer Breite des U-förmigen Kanals (17), die optional gleich oder vorzugsweise größer als der Kabeldurchmesser des Kabels (5, 21) sind.

7. Antrieb für eine Stelleinheit nach dem vorhergehenden Anspruch, **dadurch gekennzeichnet, dass** an dem der Gelenkachse (10) zugewandtem Ende des U-förmigen Kanals (17) eine Öffnung (16) zum Hineinführen des Kabels (5, 21) in den U-förmigen Kanal (17) und/ oder die Rundung (18) des Gehäusedeckelteils (2) angeordnet sind.

8. Antrieb für eine Stelleinheit nach einem der vorhergehenden Ansprüche, **gekennzeichnet durch** einen Anschlag (19) am Gehäusedeckelteil (2) zur Drehbegrenzung zwischen dem Motorgehäuseteil (1) und Gehäusedeckelteil (2) beim Öffnen des Gehäuses (1, 2) für eine Montage, insbesondere angeordnet am U-förmigen Kanal (17) oder vorzugsweise an der Rundung (18) des Gehäusedeckelteils (2).

9. Antrieb für eine Stelleinheit nach einem der vorhergehenden Ansprüche, **gekennzeichnet durch** ein Anschlussmodul (6) zum Anschließen an eine Stromquelle, insbesondere mit einem Anschlusskontakt (7) für ein elektrisches Verbinden insbesondere mit dem Motorkontakt (4) des Elektromotors (3) mittels des Kabels (5, 21).

10. Antrieb für eine Stelleinheit nach dem vorhergehenden Anspruch, **dadurch gekennzeichnet, dass** der U-förmige Kanal (17) des Gehäusedeckelteils (2) so angeordnet ist, dass der U-förmige Kanal (17) mit dem der Gelenkachse (10) abgewandten Ende zum Anschlussmodul (6) führt, insbesondere zum Anschlusskontakt (7) des Anschlussmoduls (6).

11. Antrieb für eine Stelleinheit nach einem der vorhergehenden Ansprüche, **gekennzeichnet durch** ein Kabelhaltemittel (20) zum Befestigen des Kabels (5, 21) insbesondere im U-förmigen Kanal (17).

12. Antrieb für eine Stelleinheit nach einem der vorhergehenden Ansprüche, **gekennzeichnet durch** ein Gelenk (9, 10) für ein um die Gelenkachse (10) bewegliches Verbinden von dem Motorgehäuseteil (1) und dem Gehäusedeckelteil (2), vorzugsweise für ein loses Verbinden, insbesondere mittels eines L-förmigen Gelenkarms (9) und/ oder eines O-förmige Gelenkzapfens (8).

13. Antrieb für eine Stelleinheit nach dem vorhergehenden Anspruch, **dadurch gekennzeichnet, dass** der Gelenkarms (9) am Gehäusedeckelteil (2) und/ oder der Gelenkzapfen (8) am Motorgehäuseteil (1) angeordnet sind.

14. Verfahren für die Montage eines Antriebs für eine Stelleinheit, insbesondere Servoschließeinrichtung, vorzugsweise für ein Kraftfahrzeugschloss, mit einem Gehäuse aufweisend ein Motorgehäuseteil (1) zum Aufnehmen eines Elektromotors (3) und ein Gehäusedeckelteil (2) zum Abdecken des Motorgehäuseteils (1), wobei ein Kabel (5, 21) für das elektrische Leiten von Strom mit einem Motorkontakt (4) des Elektromotors (3) im Motorgehäuseteil (1) elektrisch verbunden ist und das Kabel (5, 21) einen Umlenkbereich (11) umfasst, **dadurch gekennzeichnet, dass** das Kabel (5, 21)
- aus dem Motorgehäuseteil (1) herausgeführt wird, insbesondere durch eine Öffnung (15) im Motorgehäuseteil (1),
- anschließend um eine gemeinsame Gelenkachse (10) von Motorgehäuseteil (1) und Gehäusedeckelteil (2) geführt wird, und
- schließlich in den Gehäusedeckelteil (2) hineingeführt wird, insbesondere durch eine Öffnung (16) im Gehäusedeckelteil (2).

## Claims

1. Drive for an actuator unit, in particular a servo latching device, preferably for a motor vehicle latch, with a housing having a motor housing section (1) to accommodate an electromotor (3) and a housing lid section (2) to cover the motor housing section (1), whereby a cable (5, 21) for the electrical conduction of electricity with a motor contact (4) of the electromotor (3) in the motor housing section (1) is electrically connected and the cable (5, 21) has a deflection area (11), whereby the deflection area (11) of the cable (5, 21) is arranged outside of or at least partially outside of the housing (1, 2), **characterized in that** the deflection area (11) of the cable (5, 21) is arranged in such a way that the deflection area (11) runs around the common joint axis (10) of the motor housing section (1) and housing lid section (2), in particular in direct proximity to the joint axis (10) or optionally by means of the joint axis (10).

2. Drive for an actuator unit according to claim 1, **characterized in that** a rounding (12) on the motor housing section (1) or a rounding (18) on the housing lid section (2) is designed such that it is capable of conducting the cable (5, 21) in the deflection area (11) around the joint axis (10) on the side of the joint axis (10) turned away from the electromotor (3) and/or has a radius which is greater than or equal to the permissible bending radius of the cable (5, 21).

3. Drive for an actuator unit according to one of the previous claims, **characterized in that** one or several ribs (13) on the motor housing section (1) to limit the lateral movement range of the cable (5, 21) at least in one part of the deflection area (11), in particular at least two ribs, preferably exactly two ribs with a distance from one another, which is optionally equal to or preferably greater than the cable diameter of the cable (5, 21).

4. Drive for an actuator unit according to the previous claim, **characterized in that** the rib (13) of the motor housing section (1) provides for a stop (14) to limit the rotation of the housing lid section (2) when opening the housing (1.2) for mounting.

5. Drive for an actuator unit according to one of the previous claims, **characterized in that** the motor contact (4) of the electromotor (3) is turned towards the joint axis (10) and/or an aperture (15) is arranged in the motor housing section (1) such that the aperture (15) is tangentially supported on the rounding (12) of the motor housing section (1) on the outside of the motor housing section (1).

6. Drive for an actuator unit according to one of the previous claims, **characterized by** a U-shaped channel (17) on the housing lid section (2) to conduct the cable (5, 21) in particular with a depth or a depth and a width of the U-shaped channel (17), which are optionally equal to or preferably greater than the cable diameter of the cable (5, 21).

7. Drive for an actuator unit according to the previous claim, **characterized in that** on the end of the U-shaped channel (17) turned towards the joint axis (10) an aperture (16) is arranged to guide the cable (5, 21) into the U-shaped channel (17) and/or the rounding (18) of the housing lid section (2).

8. Drive for an actuator unit according to one of the previous claims, **characterized by** a stop (19) on the housing lid section (2) to limit rotation between the motor housing section (1) and the housing lid section (2) during opening of the housing (1, 2) for mounting, in particular arranged on the U-shaped channel (17) or preferably on the rounding (18) of the housing lid section (2).

9. Drive for an actuator unit according to one of the previous claims, **characterized by** a connection module (6) for connection to a power source, in particular with a connection contact (7) for electrical connection in particular with the motor contact (4) of the electromotor (3) by means of the cable (5, 21).

10. Drive for an actuator unit according to the previous claim, **characterized in that** the U-shaped channel (17) of the housing lid component (2) is arranged such that the U-shaped channel (17) leads to the connection module (6) with the end turned away from the joint axis (10), in particular to the connection contact (7) of the connection module (6).

11. Drive for an actuator unit according to one of the previous claims, **characterized by** a cable retainer (20) to fasten the cable (5, 21) in particular in the U-shaped channel (17).

12. Drive for an actuator unit according to one of the previous claims, **characterized by** a joint (9, 10) for movable connection around the motor housing section (1) and the housing lid section (2) preferably for a loose connection, in particular by means of an L-shaped joint arm (9) and/or an O-shaped joint pin (8).

13. Drive for an actuator unit according to the previous claim, **characterized in that** the joint arm (9) is arranged on the housing lid section (2) and/or the joint pin (8) is arranged on the motor housing section (1).

14. Procedure for the mounting of a drive for an actuator unit, in particular servo latching device, preferably for a motor vehicle latch, with a housing having a motor housing section (1) to accommodate an electromotor (3) and a housing lid section (2) to cover the motor housing section (1), whereby a cable (5, 21) is electrically connected for the electrical conduction of power with a motor contact (4) of the electromotor (3) in the motor housing section (1) and the cable (5, 21) comprises a deflection area (11), **characterized in that** the cable (5, 21)
- is conducted out of the motor housing section (1), in particular by means of an aperture (15) in the motor housing section (1),
- is subsequently conducted around a common joint axis (10) of the motor housing section (1) and the housing lid section (2), and
- is finally conducted into the housing lid section (2), in particular through an aperture (16) in the housing lid section (2).

## Revendications

1. Entraînement pour une unité de commande, notamment un dispositif de fermeture asservi, de préférence une serrure de véhicule à moteur, comportant une partie boîtier de moteur (1) destinée à recevoir un moteur électrique (3) et une partie couvercle de boîtier (2) destinée à recouvrir la partie boîtier de moteur (1), un câble (5, 21) destiné à conduire électriquement un courant étant connecté électriquement à un contact moteur (4) du moteur électrique (3) dans la partie boîtier de moteur (1), le câble (5, 21) présentant une zone de déviation (11), la zone de déviation (11) du câble (5, 21) étant disposée en dehors ou au moins partiellement en dehors du boîtier (1, 2) **caractérisé en ce que** la zone de déviation (11) du câble (5, 12) est disposée de façon que la zone de déviation (11) passe autour de l'axe articulé (10) commun de la partie boîtier de moteur (1) et de la partie couvercle de boîtier (2), notamment à proximité directe par rapport à l'axe articulé (10) ou en option par l'axe articulé (10).

2. Entraînement pour une unité de commande selon la revendication 1 **caractérisé en ce qu'**un arrondi (12) à la partie boîtier de moteur (1) ou un arrondi (18) à partie couvercle de boîtier (2) sont réalisés de façon qu'ils peuvent guider le câble (5, 21) dans la zone de déviation (11) autour de l'axe articulé (10) sur le côté opposée au moteur électrique (3) et/ou présentent un rayon supérieur ou égal au rayon de courbure admissible du câble (5, 21).

3. Entraînement pour une unité de commande selon l'une des revendications précédentes **caractérisé en ce que** par une ou plusieurs nervures (13) à la partie boîtier de moteur (1) pour délimitation du jeu de mouvement latéral du câble (5, 21) au moins dans une partie de la zone de déviation (11), notamment deux nervures, de préférence exactement deux nervures avec une distance entre elle qui est en option identique ou de préférence supérieur au diamètre du câble (5, 21).

4. Entraînement pour une unité de commande selon la revendication précédente **caractérisé en ce que** la nervure (13) la partie boîtier de moteur (1) prévoit une butée (14) pour limitation de rotation de la partie couvercle de boîtier (2) lors de l'ouverture du boîtier (1, 2) pour un montage.

5. Entraînement pour une unité de commande selon l'une des revendications précédentes **caractérisé en ce que** le contact de moteur (4) du moteur électrique (3) est orienté vers l'axe articulé (10) et/ou une ouverture (15) est placée dans la partie boîtier de moteur (1) de façon que l'ouverture (15) pose sur la partie extérieure de la partie boîtier de moteur (1) tangentiellement sur l'arrondi (12) de la partie boîtier de moteur (1).

6. Entraînement pour une unité de commande selon l'une des revendications précédentes **caractérisé en ce que** par un canal (17) en forme de U à la partie couvercle de boîtier (2) pour guider le câble (5, 21), notamment avec une profondeur et une largeur du canal (17) en forme de U qui est en option identique ou de préférence supérieure au diamètre du câble (5, 21).

7. Entraînement pour une unité de commande selon la revendication précédente **caractérisé en ce qu'**à l'extrémité orientée vers l'axe articulé (10) du canal (17) en forme de U, une ouverture (16) est disposée destinée à introduire le câble (5, 21) dans le canal (17) en forme de U et/ou l'arrondi (18) de la partie couvercle de boîtier (2).

8. Entraînement pour une unité de commande selon l'une des revendications précédentes **caractérisé par** une butée (19) placée à la partie couvercle de boîtier (2) pour limitation de rotation entre la partie boîtier de moteur (1) et la partie couvercle de boîtier (2) lors de l'ouverture du boîtier (1, 2) pour un montage, notamment disposée au canal (17) en forme de U ou de préférence à l'arrondi (18) de la partie couvercle de boîtier (2).

9. Entraînement pour une unité de commande selon l'une des revendications précédentes **caractérisé par** un module de raccordement (6) pour raccorder à une source électrique, notamment à un contact de raccordement (7) destiné à une connexion électrique notamment avec le contact de moteur (4) du moteur électrique (3) avec le câble (5, 21).

10. Entraînement pour une unité de commande selon l'une des revendications précédentes **caractérisé en ce que** le canal (17) en forme de U de la partie couvercle de boîtier (2) est disposé de façon que le canal (17) en forme de U conduit vers le module de raccordement (6), avec l'extrémité opposé à l'axe articulé (10), notamment vers le contact de raccordement (7) du module de raccordement (6).

11. Entraînement pour une unité de commande selon l'une des revendications précédentes **caractérisé par** un moyen de maintien de câble (20) pour fixer le câble (5, 21), notamment dans le canal (17) en forme de U.

12. Entraînement pour une unité de commande selon l'une des revendications précédentes **caractérisé par** une articulation (9, 10) pour une connexion mobile autour de l'axe articulé (10) de la partie boîtier de moteur (1) et de la partie couvercle de boîtier (2), de préférence pour une connexion lâche, notamment à l'aide d'un bras articulé (9) en forme de L et/ou un tenon articulé (8) en forme de O.

13. Entraînement pour une unité de commande selon l'une des revendications précédentes **caractérisé en ce que** le bras articulé (9) est disposé à la partie couvercle de boîtier (2) et/ou le tenon articulé (8) à la partie boîtier de moteur (1).

14. Procédé de montage d'un entraînement pour une unité de commande, notamment un dispositif de fermeture asservi, de préférence pour une serrure de véhicule à moteur avec un boîtier, comportant une partie boîtier de moteur (1) destinée à recevoir un moteur électrique (3) et une partie couvercle de boîtier (2) destinée à recouvrir la partie boîtier de moteur (1), un câble (5, 21) destiné à conduire électriquement un courant étant connecté électriquement à un contact moteur (4) du moteur électrique (3) dans la partie boîtier de moteur (1) et le câble (5, 21) comprenant une zone de déviation (11) **caractérisé en ce que** le câble (5, 21)
- est sorti de la partie boîtier de moteur (1), notamment par une ouverture (15) dans la partie boîtier de moteur (1)
- ensuite guidé autour d'un axe articulé (10) commun de la partie boîtier de moteur (1) et partie couvercle de boîtier (2) et
- pour finir introduit dans la partie couvercle de boîtier (2), notamment par une ouverture (16) dans partie couvercle de boîtier (2).
